# EUROPÄISCHE PATENTSCHRIFT

(11) **EP 1 275 935 B1**
(45) Veröffentlichungstag und Bekanntmachung des Hinweises auf die Patenterteilung: **07.01.2009**
(21) Anmeldenummer: 02014395.4
(22) Anmeldetag: 28.06.2002
(51) Int. Cl.: G01C 21/36

(54) **Verfahren zur akustischen Wiedergabe von Informationen im Rahmen eines Fahrerinformationssystems**
Method for the acoustic rendering of information in the framework of a driver information system
Procédé pour la reproduction acoustique des informations dans le cadre d'un système d'information pour conducteurs

(30) Priorität: 13.07.2001 DE 10134227
(43) Veröffentlichungstag der Anmeldung: 15.01.2003
(73) Patentinhaber: ROBERT BOSCH GMBH, 70442 Stuttgart (DE)
(72) Erfinder: Kulms, Andreas, 65933 Frankfurt (DE); Schreiner, Jörg, 60594 Frankfurt (DE)

(56) Entgegenhaltungen:
- WO-A-02/46700
- DE-A1- 19 908 137
- US-A- 5 406 492
- PATENT ABSTRACTS OF JAPAN Bd. 1997, Nr. 01, 31. Januar 1997 (1997-01-31) & JP 08 247779 A (HONDA MOTOR CO LTD), 27. September 1996 (1996-09-27)

## Beschreibung

### Stand der Technik

Die Erfindung betrifft ein Verfahren zur akustischen Wiedergabe von Informationen im Rahmen eines Fahrerinformationssystems zur Sprachausgabe von Fahranweisungen.

Fahrerinformationssysteme umfassen in der Regel mehrere Komponenten, die dem Fahrer unterschiedliche Informationen zur Verfügung stellen, um ihn bei der Fahrzeugnutzung zu unterstützen. Dabei kann es sich um Informationen über die richtige Handhabung einzelner Fahrzeugkomponenten handeln, wie z.B. die Spiegel- und Sitzeinstellung, oder um Informationen über den Fahrzeugzustand, wie z.B. den Tankfüllstand bzw. die diesem entsprechende Reichweite, oder auch um Umgebungsinformationen, wie z.B. die Außentemperatur oder Uhrzeit und Datum. Viele aus der Praxis bekannte Fahrerinformationssysteme umfassen auch ein Navigationssystem, das dem Fahrer Weginformationen, beispielsweise in Form einer Fahrtroute oder in Form von Fahranweisungen, zur Verfügung stellt.

Viele der von einem Fahrerinformationssystem gelieferten Informationen können sowohl visuell - beispielsweise auf einem Monitor im Fahrzeugcockpit - als auch akustisch - beispielsweise über eine Verstärkereinrichtung in Verbindung mit einer Lautsprechereinrichtung im Fahrzeuginnenraum - wiedergegeben werden, wenn das Fahrerinformationssystem über entsprechende Wiedergabemittel verfügt. Insbesondere die akustische Wiedergabe von Fahranweisungen in Form einer Sprachausgabe hat sich in der Praxis bewährt. Die Texte der Sprachausgabe sind bei leistungsfähigen Navigationssystemen der gegebenen Verkehrssituation angepasst, so dass beispielsweise zwischen den graduell unterschiedlichen Richtungsangaben "links", "halb links" und "scharf links" unterschieden wird. Bei den bekannten Fahrerinformationssystemen haben diese Unterscheidungen allerdings keine Auswirkung auf die Soundeinstellung der Sprachausgabe.

Aus der US 5,406,492 ist eine Navigationsvorrichtung mit einer Sprachausgabe für Fahranweisungen bekannt. Hierbei wird die Sprachausgabe über ein entsprechendes Audiosystem derart durchgeführt, dass die Sprachausgabe für den Fahrer aus einer bestimmten Richtung im Fahrzeug zu kommen scheint.

Aus der JP 08-24779 A ist eine Vorrichtung zur Sprachausgabe insbesondere für eine Navigationsvorrichtung bekannt, bei der in einem aus mehreren Sätzen bestehenden Sprachausgabe ein gesamter, wichtiger Satz durch eine gegenüber den übrigen Sätzen geänderte Sprachausgabe hervorgehoben wird.

### Vorteile der Erfindung

Mit der vorliegenden Erfindung wird vorgeschlagen, das Klangbild der akustischen Wiedergabe an die Semantik der jeweils vom Fahrerinformationssystem gelieferten Informationen anzupassen. Erfindungsgemäß ist nämlich erkannt worden, dass der Fahrer beim Umsetzen der Informationen durch eine dynamische, an den jeweiligen Informationsgehalt angepasste Soundeinstellung der Sprachausgabe unterstützt werden kann, wenn die Informationen jeweils so wiedergegeben werden, dass sie der Fahrer bereits vor einer rationalen Interpretation bzw. Auswertung intuitiv erfassen kann.

Grundsätzlich gibt es verschiedene Möglichkeiten für die Realisierung des erfindungsgemäßen Verfahrens. Verfahrens. Dabei ist unter anderem auch die Art der wiederzugebenden Informationen zu berücksichtigen. In vielen Fällen erweist es sich als vorteilhaft, die Lautstärke der akustischen Wiedergabe an die Semantik der Informationen anzupassen.

So kann der Fahrer beispielsweise mit erhöhter Lautstärke darauf hingewiesen werden, dass er die vom Navigationssystem vorgeschlagene Fahrtroute verlassen hat oder gegen die Fahrtrichtung in eine Einbahnstraße eingebogen ist. Die Lautstärke der akustischen Wiedergabe kann auch in Abhängigkeit von der Dringlichkeit der Informationen geregelt werden. Als Anwendungsbeispiel hierfür sei die Ansage der mit der aktuellen Tankfüllung verbleibenden Reichweite genannt. Vorteilhafterweise erfolgt diese Ansage immer dann besonders laut, wenn sich die Tankanzeige im roten Bereich befindet. Eine Lautstärkeregelung kann auch bei der Wiedergabe von Fahranweisungen mit Entfernungsangaben sinnvoll sein. So werden während eines Navigationsvorgangs Fahranweisungen, wie z.B. "In 500m rechts abbiegen" in der Regel ein bis zweimal wiederholt, bis das Fahrzeug die Abbiegestelle passiert hat. Bei den Wiederholungen wird die Entfernungsangabe an die aktuelle Position des Fahrzeugs angepasst. In diesem Zusammenhang erweist es sich als vorteilhaft, die Lautstärke der akustischen Wiedergabe an die jeweilige Entfernungsangabe anzupassen, so dass die Fahranweisung um so lauter wiedergegeben wird, je weiter sich das Fahrzeug der Abbiegestelle nähert. Von Vorteil ist es außerdem, wenn Schlagworte oder Keywords im Text einer Fahranweisung mit erhöhter Lautstärke wiedergegeben und dadurch hervorgehoben bzw. betont werden. So wird die Aufmerksamkeit des Fahrers beispielsweise bei der Fahranweisung "An der nächsten Kreuzung links abbiegen" schon intuitiv auf die Richtungsangabe gelenkt, wenn des Wort "links" lauter wiedergegeben wird als der Rest der Sprachausgabe.

Stehen dem Fahrerinformationssystem akustische Wiedergabemittel zur Verfügung, mit denen sich ein räumliches Klangbild erzeugen lässt, so lässt sich eine besonders vorteilhafte Variante des erfindungsgemäßen Verfahrens realisieren. Diese Variante betrifft die Wiedergabe von raumbezogenen Informationen. Erfindungsgemäß wird hier die räumliche Klangverteilung bei der akustischen Wiedergabe so an die raumbezogenen Informationen angepasst, dass die raumbezogenen Informationen schon aufgrund des räumlichen Klangbildes ihrer akustischen Wiedergabe intuitiv erfassbar sind. So werden beispielsweise Fahranweisungen in Form von Richtungsvorgaben bevorzugt aus der vorgegebenen Richtung wiedergegeben, so dass die vorgegebene Richtung im räumlichen Klangbild der akustischen Wiedergabe hervorgehoben wird. Mit der akustischen Wahrnehmung wird auch die Raumorientierung des Fahrers unmittelbar in die vorgegebene Richtung gelenkt. Dazu wird jeder Fahranweisung mit einer Richtungsvorgabe eine bestimmte Lautstärkeverteilung für die zur Verfügung stehenden Lautsprecher zugeordnet. Die Lautstärkeverteilung kann während der akustischen Wiedergabe auch dynamisch geregelt werden, so dass nacheinander unterschiedliche Richtungen im räumlichen Klangbild mehr oder weniger stark hervorgehoben werden. Auf diese Weise können Weginformationen im Klangraum des Kraftfahrzeugs nachgezeichnet werden.

### Zeichnungen

Wie bereits voranstehend ausführlich erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung mehrerer Ausführungsbeispiele der Erfindung anhand der Zeichnungen verwiesen.
- Fig. 1: veranschaulicht eine erfindungsgemäße Lautstärkeverteilung der akustischen Wiedergabe von ausgewählten Richtungsvorgaben bezüglich der Position des Fahrers,
- Fig. 2: veranschaulicht eine erfindungsgemäße Regelung der Lautstärke der akustischen Wiedergabe von ausgewählten Fahranweisungen in Abhängigkeit von ihrer Bedeutung und
- Fig. 3: veranschaulicht, wie eine Fahranweisung mit einer sich über die Zeit verändernden Klangausrichtung in der Fahrgastzelle wiedergegeben wird.

### Beschreibung der Ausführungsbeispiele

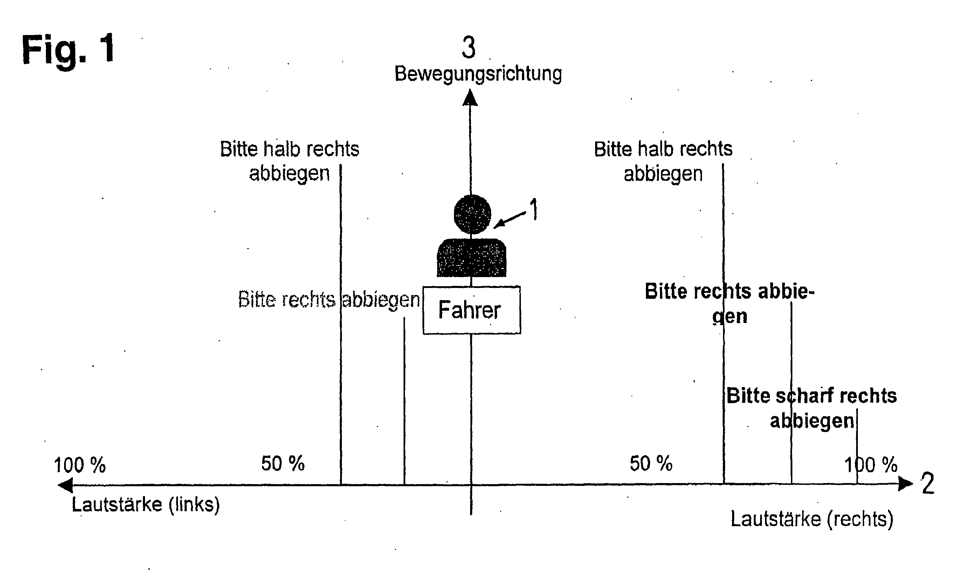

Fig. 1 bezieht sich, wie bereits erwähnt, auf die akustische Wiedergabe von Fahranweisungen mit Richtungsvorgaben, die von einem Navigationssystem ermittelt worden sind. Bei dem hier in Rede stehenden Ausführungsbeispiel steht dem Navigationssystem eine Wiedergabeeinrichtung zur Verfügung, die für die Erzeugung eines räumlichen Klangbildes ausgelegt ist. Dazu umfasst die Wiedergabeeinrichtung mindestens einen Verstärker und mindestens zwei unabhängig voneinander regelbare Lautsprecher, die den Fahrzeuginnenraum bzw. den Fahrer aus unterschiedlichen Richtungen - hier von rechts und von links - beschallen können. Für die Realisierung des erfindungsgemäßen Verfahrens sind außerdem Regelungsmittel zur Regelung der akustischen Wiedergabe in Abhängigkeit von der Semantik der Fahranweisungen erforderlich.

Fig. 1 veranschaulicht eine Möglichkeit für die erfindungsgemäße Wiedergabe der Richtungsvorgaben "Bitte scharf rechts abbiegen", "Bitte rechts abbiegen" und "Bitte halb rechts abbiegen". Der Fahrer 1, der ja immer in der Bewegungsrichtung 3 des Fahrzeugs ausgerichtet ist, ist hier piktogrammartig in der Mitte des Schemas dargestellt. Die Bewegungsrichtung 3 bildet die y-Achse des Schemas und legt den Nullpunkt auf der x-Achse 2 des Schemas fest, auf der der prozentuale Richtungsanteil an der Gesamtlautstärke der Wiedergabe dargestellt ist. Die rechte Hälfte der x-Achse 2 gibt den Lautstärkeanteil der Lautsprecher an, die den Fahrer von rechts beschallen, während nach links der Lautstärkeanteil der Lautsprecher angegeben ist, die den Fahrer von links beschallen. In dem durch die x-Achse 2 und die y-Achse 3 aufgespannten Diagramm sind die Richtungsvorgaben "Bitte scharf rechts abbiegen", "Bitte rechts abbiegen" und "Bitte halb rechts abbiegen" entsprechend ihrer Wiedergabe aus den beiden Raumrichtungen rechts und links an unterschiedlicher Stelle und unterschiedlich fett dargestellt. So wird die Richtungsvorgabe "Bitte scharf rechts abbiegen" ausschließlich, d.h. zu 100%, von rechts wiedergegeben, während die anderen Lautsprecher stumm geschaltet sind. Die Richtungsvorgabe Bitte rechts abbiegen" wird hier zu etwa 80% von rechts und zu etwa 20% von links wiedergegeben. Für die Richtungsvorgabe "Bitte halb rechts abbiegen" wurde hier die Lautstärkeverteilung ca. 60% von rechts und ca. 40% von links gewählt. D.h. für die nicht so scharf formulierten Rechts-Abbiege-Fahranweisungen wird die Balanceeinstellung des Verstärkers bei der Sprachausgabe entsprechend nach links verschoben, so dass die Sprachausgabe zwar mit verminderter Lautstärke aber auch über die links beschallenden Lautsprecher erfolgt. Analog werden Links-Abbiege-Fahranweisungen im wesentlichen über die linken Lautsprecher wiedergegeben.

Sinnvollerweise werden bei der Festlegung der Lautstärkeverteilung für die einzelnen Fahranweisungen auch ergonomische Gesichtspunkte berücksichtigt. Generell kann aber festgehalten werden, dass die Abhängigkeit zwischen Lautstärkeverteilung und Soll-Fahrtrichtung durch eine stetige Funktion wiedergegeben wird, die in ihrem Verlauf durch eine Softwaretabelle frei konfigurierbar gehalten werden kann.

Bei dem voranstehend beschriebenen Ausführungsbeispiel erfolgt die erfindungsgemäße Anpassung des Klangbildes an die Semantik der Richtungsvorgabe durch eine geeignete Balanceeinstellung des Verstärkers, d.h. durch eine geeignete Verteilung der Lautstärke auf die Lautsprecher, die den Fahrer von rechts und von links beschallen. Dazu bestimmt das Navigationssystem mit Hilfe einer entsprechenden Software zusätzlich zu jeder ermittelten Fahranweisung ein geeignetes Klangbild. Nach der automatischen Einstellung des jeweiligen Klangbildes am Verstärker wird die Fahranweisung über die Lautsprecher ausgegeben. Der Fahrer wird zwar selbstverständlich auch weiterhin durch die Semantik der gesprochenen Fahranweisung geleitet. Die Fahrführung des Fahrers wird aber erfindungsgemäß noch zusätzlich durch ein geeignet gewähltes Klangbild der Sprachausgabe unterstützt, durch das der Fahrer den Informationsgehalt der Fahranweisung auch intuitiv erfassen kann.

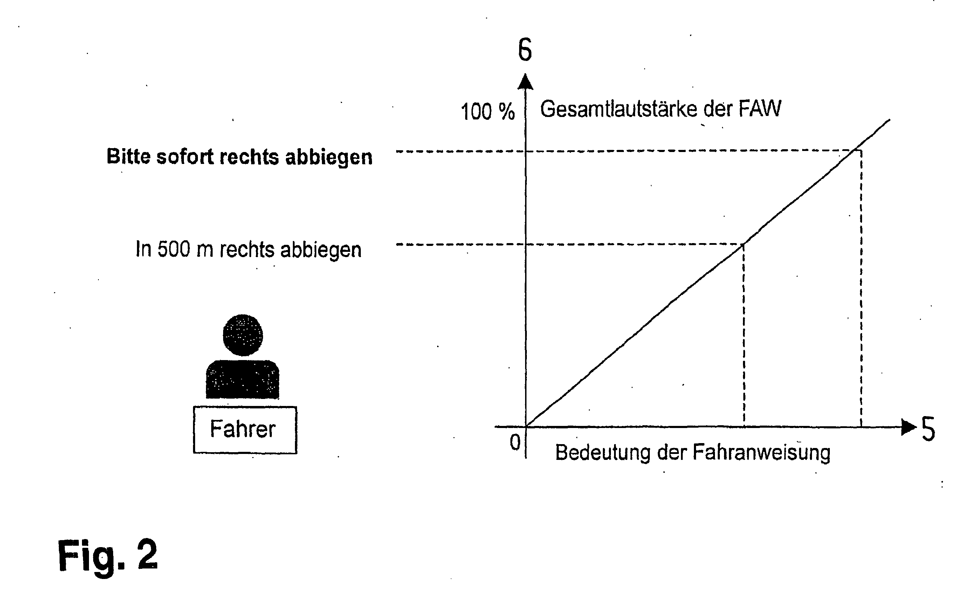

Fig. 2 veranschaulicht die Möglichkeit, die Lautstärke der Wiedergabe von Fahranweisungen mit Hilfe des erfindungsgemäßen Verfahrens entsprechend ihrer Bedeutung bzw. Wichtigkeit oder Dringlichkeit zu regeln. Die x-Achse 5 des in Fig. 2 dargestellten Diagramms soll den Grad der Bedeutung einer Fahranweisung angeben, während auf der y-Achse 6 die Wiedergabelautstärke prozentual dargestellt ist. Im vorliegenden Fall wird die Fahranweisung "In 500m rechts abbiegen" leiser wiedergegeben, als die Fahranweisung "Bitte sofort rechts abbiegen". Bei dieser Variante des erfindungsgemäßen Verfahrens wird also lediglich die Lautstärke der akustischen Wiedergabe in Abhängigkeit von der Semantik der Fahranweisung geregelt.

Im Rahmen einer derartigen Lautstärkeregelung können auch nur einzelne Schlagworte innerhalb einer Fahranweisung betont werden. So könnte z.B. innerhalb der Fahranweisung "An der nächsten Kreuzung bitte rechts abbiegen" das Wort "rechts" etwas lauter ausgegeben werden als der Rest, da dieses Wort die eigentlich entscheidende Information für den Fahrer beinhaltet.

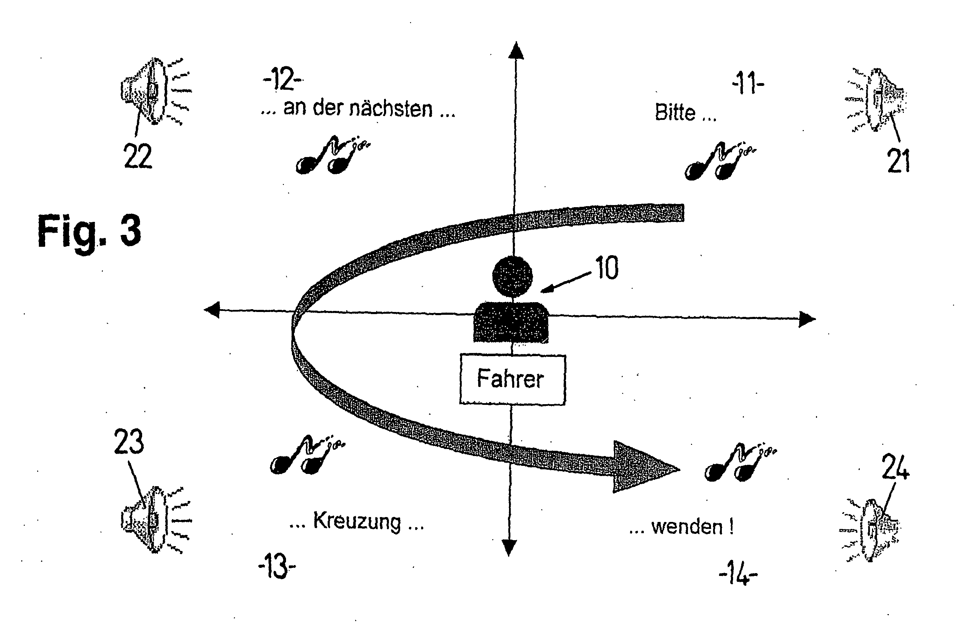

Das in Fig. 3 dargestellte Diagramm veranschaulicht, dass sich mit Hilfe von mindestens vier frei regelbaren und entsprechend angeordneten Lautsprechern mit je einem Audiokanal - ähnlich dem Dolby Surround Digital Verfahren - ein Klangbild erzeugen lässt, das sich während der Wiedergabe einer Fahranweisung dynamisch ändert, so dass im Klangraum des Kraftfahrzeugs sogar ein räumlicher Weg dargestellt werden kann. Im Zentrum des Diagramms ist hier der Fahrer 10 dargestellt. Die vom Fahrer 10 ausgehenden Achsen teilen den Raum in vier Quadranten 11 bis 14, in denen jeweils ein Lautsprecher 21 bis 24 angeordnet ist. Die Lautsprecher 21 bis 24 sind individuell ansteuerbar. Das Diagramm veranschaulicht, wie sich das Klangzentrum der Fahranweisung "Bitte an der nächsten Kreuzung wenden" während der Wiedergabe von rechts vorne über links vorne und links hinten nach rechts hinten verlagert und so die Information der Fahranweisung durch eine sich über die Zeit verändernde Klangausrichtung im Fahrzeuginnenraum nachempfunden wird.

Als weiteres Beispiel für die voranstehend erläuterte Variante des erfindungsgemäßen Verfahrens sei hier eine akustische Umsetzung der Fahranweisung "Nach hundert Metern rechts abbiegen" genannt. Das Klangzentrum könnte sich hier während der Sprachausgabe von mitte hinten nach rechts vorne verlagern.

Bei dieser Variante des erfindungsgemäßen Verfahrens steht die Lautstärkeverteilung der gesprochenen Fahranweisung nicht nur mit der Semantik der Fahranweisung in Relation, sondern verändert sich sogar dynamisch über die Zeit, wobei der zeitliche Verlauf der Lautstärkeverteilung ebenfalls von der Semantik der Fahranweisung abhängt.

Bei allen drei voranstehend beschriebenen Varianten des erfindungsgemäßen Verfahrens wird das Klangbild der Fahranweisung an deren Semantik angepasst. Allein durch die Wahrnehmung des Klangbildes wird der Fahrer bereits in eine bestimmte Fahrtrichtung gewiesen. Entsprechend dem Text der Fahranweisung wählt das Navigationssystem automatisch eine Klangeinstellung für die Sprachausgabe, die die Orientierung des Fahrers in die gewünscht Richtung lenkt. Dabei entscheidet die Navigationssoftware selbständig, welche Klangeinstellung die günstigste für eine bestimmte Fahranweisung ist. Dabei können - wie voranstehend erläutert - unterschiedliche Techniken der Klangeinstellung verwendet werden, mit denen sich sowohl statische als auch dynamische Klangbilder erzeugen lassen. Wesentlich ist, dass der Fahrer allein durch das Klangbild der Fahranweisung bereits eine Fahrvorgabe erhält. Durch ein der jeweiligen Situation angepasstes Klangbild kann der Fahrer die Fahranweisung direkt, d.h. auch intuitiv, wahrnehmen und umsetzen. So muss der Fahrer beispielsweise das Wort "rechts" allein zunächst gedanklich in eine räumliche Orientierung umsetzen. Dagegen wird der Fahrer bereits nach rechts ausgerichtet, wenn er eine entsprechende Fahranweisung ausschließlich von rechts wahrnimmt, noch bevor der Fahrer die Semantik der Fahranweisung erfasst hat. Der erfindungsgemäß vorgeschlagenen akustischen Unterstützung von gesprochenen Fahranweisungen kommt ähnliche Bedeutung zu, wie der visuellen Unterstützung von Fahranweisungen in Textform. Neben dem auf einem Monitor dargestellten Text "Bitte rechts abbiegen", der vom Fahrer gelesen und interpretiert werden muss, wird dazu häufig ein Piktogramm-Pfeil dargestellt, der dem Fahrer die angegebene Richtung weist.

## Patentansprüche

1. Verfahren zur akustischen Wiedergabe von Informationen im Rahmen eines Fahrerinformationssystems zur Sprachausgabe von Fahranweisungen, wobei das Klangbild der akustischen Wiedergabe an die Semantik der Informationen angepasst wird, wobei die Lautstärke der akustischen Wiedergabe an die Semantik der Informationen angepasst wird, **dadurch gekennzeichnet, dass** die Wörter links und rechts als Richtungsangaben im Text der Sprachausgabe einer Fahranweisung lauter wiedergegeben werden als der Rest der Sprachausgabe und **dadurch** hervorgehoben bzw. betont werden.

2. Verfahren nach Anspruch 1, **dadurch gekennzeichnet, dass** die Lautstärke der akustischen Wiedergabe in Abhängigkeit von der Dringlichkeit der Informationen geregelt wird.

3. Verfahren zur Sprachausgabe von Fahranweisungen nach einem der vorhergehenden Ansprüche, **dadurch gekennzeichnet, dass** die Lautstärke der akustischen Wiedergabe von Fahranweisungen mit Entfernungsangaben an die jeweilige Entfernungsangabe angepasst wird.

4. Verfahren nach einem der vorhergehenden Ansprüche, wobei dem Fahrerinformationssystem akustische Wiedergabemittel zur Verfügung stehen, mit denen sich ein räumliches Klangbild erzeugen lässt, **dadurch gekennzeichnet, dass** die räumliche Klangverteilung bei der akustischen Wiedergabe von raumbezogenen Informationen an die raumbezogenen Informationen angepasst wird, so dass die raumbezogenen Informationen schon aufgrund des räumlichen Klangbildes ihrer akustischen Wiedergabe intuitiv erfassbar sind.

5. Verfahren zur Sprachausgabe von Fahranweisungen nach Anspruch 4, **dadurch gekennzeichnet, dass** Fahranweisungen in Form von Richtungsvorgaben bevorzugt aus der vorgegebenen Richtung wiedergegeben werden, so dass die vorgegebene Richtung im räumlichen Klangbild der akustischen Wiedergabe hervorgehoben wird.

6. Verfahren nach einem der Ansprüche 4 oder 5, **dadurch gekennzeichnet, dass** Weginformationen des räumlichen Klangbildes während der akustischen Wiedergabe im Klangraum des Kraftfahrzeug **dadurch** nachgezeichnet werden, dass die Lautstärkeverteilung während der akustischen Wiedergabe derart dynamisch geregelt wird, dass nacheinander unterschiedliche Richtungen im räumlichen Klangbild mehr oder weniger stark hervorgehoben werden.

## Claims

1. Method for the audio reproduction of information as part of a driver information system for the voice output of driving instructions, wherein the sound of the audio reproduction is matched to the semantics of the information, with the volume of the audio reproduction being matched to the semantics of the information, **characterized in that** the words left and right as direction statements in the text of the voice output for a driving instruction are reproduced louder than the rest of the voice output and are thereby emphasized or stressed.

2. Method according to Claim 1, **characterized in that** the volume of the audio reproduction is regulated on the basis of the urgency of the information.

3. Method for the voice output of driving instructions according to one of the preceding claims, **characterized in that** the volume of the audio reproduction of driving instructions with distance statements is matched to the respective distance statement.

4. Method according to one of the preceding claims, wherein the driver information system has audio reproduction means available which can be used to produce a three-dimensional sound, **characterized in that** the three-dimensional sound distribution during the audio reproduction of space-related information is matched to the space-related information, so that the space-related information can be intuitively sensed merely on the basis of the three-dimensional sound of its audio reproduction.

5. Method for the voice output of driving instructions according to Claim 4, **characterized in that** driving instructions in the form of direction prompts are preferably reproduced from the prompted direction, so that the prompted direction is emphasized in the three-dimensional sound of the audio reproduction.

6. Method according to one of Claims 4 and 5, **characterized in that** path information in the three-dimensional sound is traced during the audio reproduction by virtue of the volume distribution during the audio reproduction being dynamically regulated such that different directions are successively emphasized to a greater or lesser extent in the three-dimensional sound.

## Revendications

1. Procédé de restitution sonore d'informations dans le cadre d'un système d'information du conducteur destiné à délivrer des instructions de conduite parlées, la sonorité de la restitution sonore étant adaptée à la sémantique des informations, le volume sonore de la restitution sonore étant adaptée à la sémantique des informations, **caractérisé en ce que** les mots à gauche et à droite servant d'indications de direction dans le texte de l'annonce vocale d'une instruction de conduite sont restitués plus forts que le reste de l'annonce vocale et sont ainsi mis en valeur ou accentués.

2. Procédé selon la revendication 1, **caractérisé en ce que** le volume sonore de la restitution sonore est régulé en fonction de l'urgence des informations.

3. Procédé destiné à délivrer des instructions de conduite parlées selon l'une des revendications précédentes, **caractérisé en ce que** le volume sonore de la restitution sonore des instructions de conduite contenant des indications de distance est adapté à l'indication de distance respective.

4. Procédé selon l'une des revendications précédentes, **caractérisé en ce que** des moyens de restitution sonore sont à la disposition du système d'information du conducteur, lesquels permettent de générer une sonorité spatiale, **caractérisé en ce que** la distribution sonore dans l'espace lors de la restitution sonore d'informations en rapport avec l'espace est adaptée aux informations en rapport avec l'espace de sorte que les informations en rapport avec l'espace peuvent déjà être assimilées intuitivement en se basant sur la sonorité spatiale de leur restitution sonore.

5. Procédé destiné à délivrer des instructions de conduite parlées selon la revendication 4, **caractérisé en ce que** les instructions de conduite sont restituées sous la forme d'indications de direction de préférence depuis la direction prédéfinie de sorte que la direction prédéfinie puisse être mise en valeur dans la sonorité spatiale de la restitution sonore.

6. Procédé selon l'une des revendications 4 ou 5, **caractérisé en ce que** les informations de trajet de la sonorité spatiale pendant la restitution sonore dans l'espace sonore du véhicule automobile sont simulées **en ce que** la distribution du volume sonore pendant la restitution sonore est régulée de telle sorte que différentes directions dans la sonorité spatiale sont plus ou moins mises en valeur les unes après les autres.
